Europäisches Patentamt

**European Patent Office**

Office européen des brevets

(19)

(11) Numéro de publication : **0 117 182**
**B1**

(12)

# FASCICULE DE BREVET EUROPÉEN

(45) Date de publication du fascicule du brevet :
**27.05.87**

(21) Numéro de dépôt : **84400210.5**

(22) Date de dépôt : **31.01.84**

(51) Int. Cl.⁴ : **G 01 N 33/48**, G 01 N 33/49

(54) **Appareil d'analyses sanguines et procédé pour sa mise en oeuvre.**

(30) Priorité : **02.02.83 FR 8301644**

(43) Date de publication de la demande :
**29.08.84 Bulletin 84/35**

(45) Mention de la délivrance du brevet :
**27.05.87 Bulletin 87/22**

(84) Etats contractants désignés :
**AT BE CH DE GB IT LI LU NL SE**

(56) Documents cités :
**FR-A- 1 077 015**
**FR-A- 2 249 333**
**US-A- 3 827 286**

(73) Titulaire : **Poncept, Gérard**
**10 Chemin de Dalibray Gaillonnet par Seraincourt**
**F-95450 Vigny (FR)**

(72) Inventeur : **Poncept, Gérard**
**10 Chemin de Dalibray Gaillonnet par Seraincourt**
**F-95450 Vigny (FR)**

(74) Mandataire : **Nony, Michel et al**
**Cabinet Nony 29, rue Cambacérès**
**F-75008 Paris (FR)**

EP 0 117 182 B1

Jouve, 18, rue St-Denis, 75001 Paris, France

## Description

La présente invention est relative à un appareil d'analyses médicales et plus précisément un appareil d'analyses sanguines permettant la détermination de vitesses de sédimentation globulaire, ainsi qu'à un procédé pour mettre en œuvre celui-ci.

On mesure traditionnellement la vitesse de sédimentation en utilisant un tube ou pipette de Westergreen, c'est-à-dire, un tube mince gradué ouvert à ses deux extrémités. Le manipulateur plonge tout d'abord un tel tube dans un tube de diamètre plus important contenant un prélèvement sanguin puis aspire le sang depuis l'extrémité supérieure du tube de Westergreen jusqu'à une graduation supérieure de référence déterminée du tube. Le tube est ensuite fermé à sa partie inférieure et placé sur un support. L'opération est répétée successivement pour chaque tube de prélèvement.

On procède ensuite à des lectures espacées, traditionnellement la première au bout d'une heure, et la seconde au bout de deux heures du niveau des hématies sédimentées dans chacun des tubes.

On procède, après l'analyse, au rinçage des tubes utilisés.

Pour un laboratoire d'analyses médicales pratiquant quotidiennement un grand nombre de mesures de vitesse de sédimentation, le processus ainsi décrit doit être répété autant de fois qu'il y a d'échantillons sanguins à analyser. Outre le fait que ce procédé soit relativement long à mettre en œuvre, il présente également un danger médical pour le manipulateur qui doit aspirer par la bouche le sang à faire passer des tubes contenant les prélèvements dans les tubes de Westergreen jusqu'au niveau approprié et qui peut, en cas d'aspiration mal dosée, avaler du sang contaminé.

Le déposant a déjà proposé dans EP-A-0 114 552 un appareil d'analyses sanguines évitant tout risque pour les manipulateurs et permettant de réaliser simultanément un grand nombre d'analyses.

La présente invention se propose de réaliser un appareil offrant les mêmes avantages que l'appareil décrit dans la demande antérieure, notamment en ce qui concerne la sécurité pour le manipulateur, tout en étant encore d'une conception et d'un fonctionnement simplifiés évitant notamment la présence d'un dispositif d'aspiration.

L'appareil selon l'invention se caractérise essentiellement par le fait qu'il comporte un premier organe de support comportant une pluralité de tubes de Westergreen gradués ouverts à leurs deux extrémités et maintenus verticalement espacés sur ledit organe de support, lesdits tubes de Westergreen comportant à la partie inférieure un tronçon de section agrandie, tubulaire ou de préférence évasé vers le bas et un second organe de support comportant une pluralité de tubes de diamètre plus important que les tubes montés sur le premier organe de support et aptes à recevoir chacun un prélèvement sanguin, lesdits tubes étant répartis espacés verticalement sur ledit second organe de support, ledit premier organe de support comportant en outre une pluralité d'éléments d'obturation et de refoulement engagés chacun dans l'extrémité inférieure de section agrandie desdits tubes de Westergreen, les organes de support étant mobiles l'un par rapport à l'autre entre une première position dans laquelle les tubes du premier organe de support sont verticalement écartés des tubes du second organe de support, et une seconde position dans laquelle les tubes du premier organe de support plongent par leur extrémité inférieure dans les tubes du second organe de support, lesdits éléments d'obturation et de refoulement étant eux-mêmes montés mobiles sur le premier organe de support entre une position basse à l'écart de la paroi des tubes du premier support, et une position haute en contact avec ladite paroi, le mouvement desdits éléments d'obturation et de refoulement entre lesdites positions basse et haute provoquant, lorsque lesdits organes de support sont dans leur dite seconde position, le refoulement d'une quantité déterminée de prélèvement sanguin des tubes du second organe de support dans les tubes du premier organe de support, chacun des éléments d'obturation et de refoulement étant solidaire de l'extrémité inférieure recourbée d'une tige mobile verticalement le long du premier organe de support. Dans un mode de réalisation particulier les différentes tiges sont solidaires, de préférence à leur extrémité supérieure, d'une pièce mobile verticalement par rapport au premier organe de support.

Dans un mode particulier de réalisation, les éléments d'obturation et de refoulement sont constitués par des disques dont le diamètre correspond au diamètre du tronçon de section agrandie si celui-ci est tubulaire ou, dans le cas d'un tronçon évasé, dont le diamètre est intermédiaire entre le diamètre d'embouchure des tubes de Westergreen du premier organe de support, et le diamètre desdits tubes dans leur partie principale non évasée, les disques dans ce dernier cas étant réalisés en une matière élastiquement déformable.

Dans un mode de réalisation particulièrement avantageux de l'invention les organes de support sont réalisés sous la forme de cylindres de section circulaire à la périphérie desquels sont montés lesdits tubes, les tiges comportant les disques d'obturation et de refoulement étant alors solidaire, à leur extrémité supérieure, d'une couronne montée mobile verticalement par rapport au cylindre constituant le premier organe de support, notamment par un mécanisme à vis et douille filetée permettant un réglage fin du mouvement vertical de la couronne par rapport au cylindre.

L'appareil selon l'invention est avantageusement complété pour son nettoyage par une cuve dans laquelle l'appareil dans son ensemble peut être plongé après achèvement des analyses, les éléments d'obturation et de refoulement pouvant alors être actionnés pour favoriser la circulation de l'eau de la cuve de nettoyage dans les tubes de Westergreen.

D'autres avantages et caractéristiques de l'invention apparaîtront à la lecture de la description suivante d'un exemple de réalisation nullement limitatif en se référant au dessin annexé dans lequel :

la figure 1 illustre schématiquement en perspective éclatée une forme de réalisation d'appareil selon l'invention,

les figures 2 à 4 illustrent schématiquement l'appareil selon trois positions de fonctionnement.

les figures 5 et 6 sont des vues de détail agrandies de l'extrémité inférieure d'un tube de Westergreen dans les positions des figures 3 et respectivement 4.

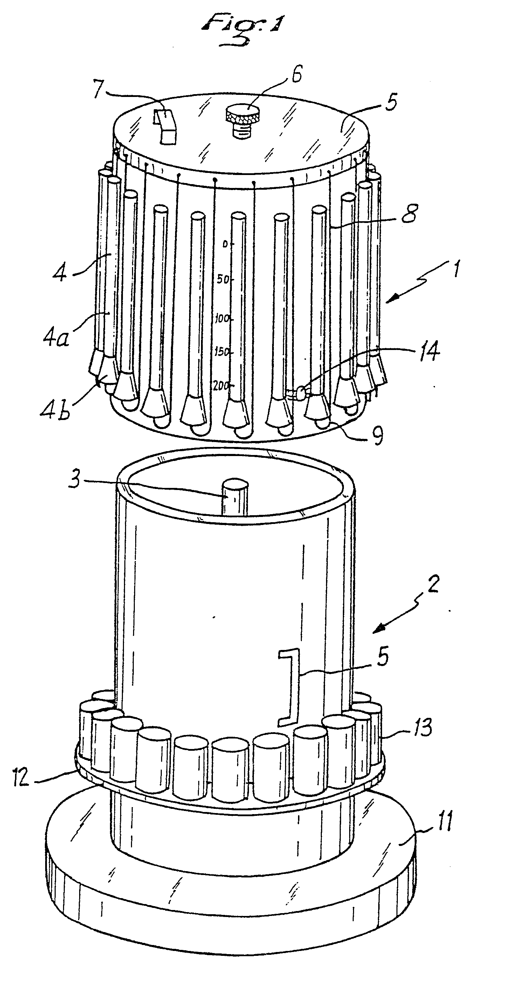

L'appareil selon l'invention représenté à la figure 1 comprend essentiellement deux cylindres de section circulaire 1 et 2, le cylindre supérieur 1 étant susceptible d'être emmanché sur le cylindre inférieur 2, les deux cylindres étant ainsi montés concentriques autour d'un axe 3.

Le cylindre supérieur 1 sert de support à une pluralité de tubes de Westergreen 4, par exemple au nombre de 25, les tubes 4 étant espacés sur la périphérie du cylindre 1, chacun des tubes 4 comportant une partie principale tubulaire 4a se prolongeant à la partie inférieure par une partie évasée en forme d'entonnoir 4b.

Chaque tube est gradué et, de préférence il est également prévu une graduation correspondant (non représentée) sur la paroi du cylindre 1.

Sur la partie supérieure du cylindre 1 est prévue une couronne 5 mobile verticalement par rapport au cylindre 1, notamment par l'intermédiaire d'une vis moletée 6 traversant un écrou fileté (non représenté) de la couronne 5.

Une poignée de préhension 7 est prévue à la partie supérieure de la couronne 5.

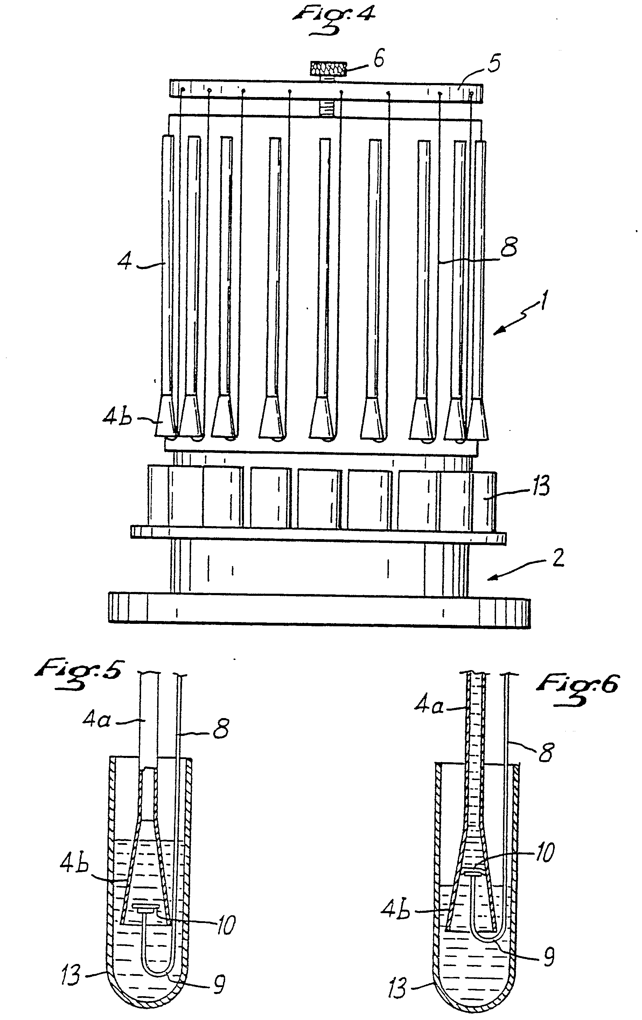

A la périphérie de la couronne 5 sont fixées des tiges, notamment métalliques 8 en nombre correspondant au nombre des tubes de Westergreen 4 chacune des tiges 8 étant recourbée en 9 à sa partie inférieure et comportant à l'extrémité de cette partie recourbée, comme on le voit aux figures 5 et 6, un disque de section circulaire élastiquement déformable 10.

Les disques 10 montés à l'extrémité inférieure des tiges 8 constituent, comme il sera expliqué plus loin, des éléments d'obturation de l'extrémité inférieure des tubes de Westergreen et de refoulement dans ceux-ci d'une quantité déterminée de prélèvement sanguin.

Le cylindre inférieur 2 comporte une embase 11 et une collerette annulaire 12 sur laquelle sont montés des tubes à essais 13 aptes à recevoir chacun un prélèvement sanguin. Le nombre de tubes à essais 13 est égal au nombre de tubes de Westergreen 4 du premier cylindre 1, c'est-à-dire dans l'exemple 25 considéré.

Il est avantageusement prévu selon l'invention, pour maintenir dans des positions relatives prédéterminées le cylindre supérieur 1 par rapport au cylindre inférieur 2, un mécanisme comportant une tige traversant diamétralement le cylindre 1 faisant saillie de sa paroi extérieure, tel que représenté en 14 sur la figure 1, ladite tige pouvant coulisser dans des rainures diamétralement opposées 15 réalisées dans la paroi du cylindre inférieur 2, chaque rainure dans l'exemple illustré comportant un tronçon vertical et deux tronçons horizontaux.

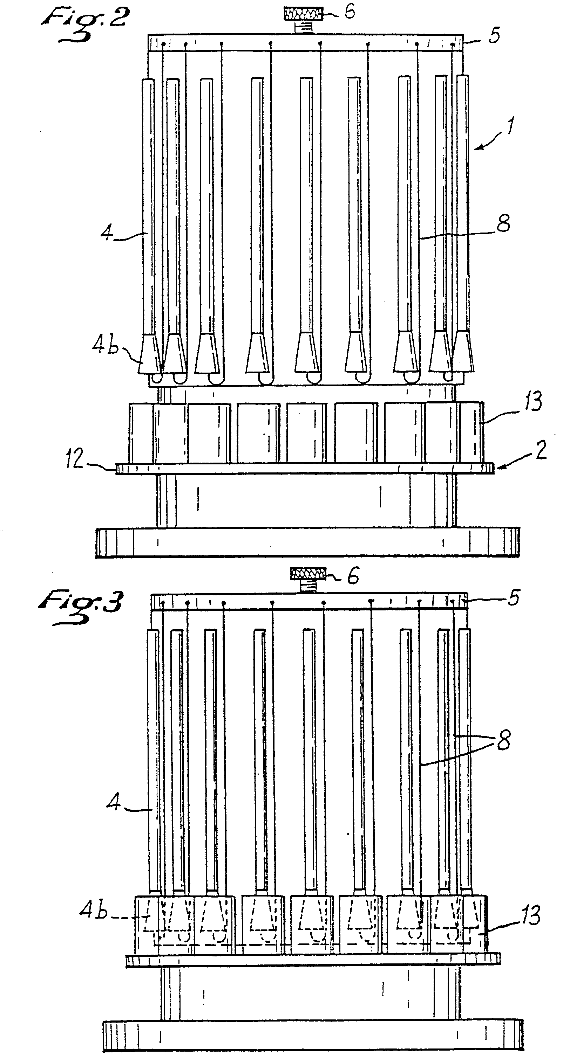

On va maintenant décrire en se référant aux figures 2 à 6, un mode de mise en œuvre de l'appareil selon l'invention.

On place d'abord comme illustré sur la figure 2, le cylindre 1 en position haute par rapport au cylindre 2 de manière à permettre la mise en place de tubes 13 contenant les prélèvements sanguins à leurs emplacements respectifs sur la collerette 12 du cylindre 2.

On abaisse ensuite le cylindre 1 par rapport au cylindre 2 jusqu'à l'amener dans la position illustrée à la figure 3 dans laquelle chacun des tubes de Westergreen 4 du cylindre 1 plonge dans un tube 13 du cylindre 2.

A l'aide de la vis moletée 6 on fait alors remonter la couronne 5 par rapport au cylindre 2 jusqu'à la position illustrée à la figure 4.

Entre les positions des figures 3 et 4, comme on le voit le mieux sur les figures 5 et 6, la remontée des tiges 8 comportant à l'extrémité de leur partie inférieure recourbée 9 les disques 10, provoque par un premier contact de la périphérie des disques 10 avec la partie évasée 4b des tubes 4 l'emprisonnement dans lesdits tubes 4 d'une quantité de prélèvement sanguin contenu initialement dans le tube 13, puis par glissement le long de la paroi intérieure de la partie évasée 4b une remontée de cette quantité de liquide dans la partie tubulaire 4a du tube de Westergreen, les diamètres respectifs des tubes, et la valeur de la course de déplacement de la couronne 5 étant déterminés de manière que la quantité de prélèvement sanguin atteigne dans chaque tube de Westergreen le niveau de référence de départ situé au voisinage de la partie supérieure du tube.

L'appareil se trouve ainsi en position de mesure et l'on peut relever à intervalles appropriés le niveau de sédimentation des hématies dans les tubes 4 par lecture soit des graduations de chacun des tubes, soit par référence aux graduations de l'échelle de mesure éventuellement prévue sur le cylindre supérieur.

Une fois l'analyse terminée, on dégage les disques 10 des tubes 4 par abaissement de la couronne 5 et après avoir ramené le cylindre 1 en position haute on retire les tubes 13 et l'on place l'ensemble de l'appareil dans une cuve à circulation d'eau dans laquelle on peut réaliser le rinçage des tubes 4 en utilisant pour créer une circulation d'eau dans les tubes un mouvement alternatif des tiges 8 provoqué par un déplacement de la couronne 5.

**Revendications**

1. Appareil d'analyses sanguines permettant la détermination de vitesses de sédimentation globulaire, caractérisé par le fait qu'il comprend un premier organe de support (1) comportant une pluralité de tubes (4), gradués, ouverts à leurs deux extrémités et maintenus verticalement espacés sur ledit organe de support, lesdits tubes (4) comportant à leur partie inférieure un tronçon de section agrandie (4b), et un second organe de support (2) comportant une pluralité de tubes (13) de diamètre plus important que les tubes montés sur le premier organe de support et aptes à recevoir chacun un prélèvement sanguin, lesdits tubes (13) étant répartis espacés verticalement sur ledit second organe de support, ledit premier organe de support comportant en outre une pluralité d'éléments (10) d'obturation et de refoulement engagés chacun dans l'extrémité inférieure agrandie (4b) desdits tubes du premier organe de support, les organes de support (1, 2) étant mobiles l'un par rapport à l'autre entre une première position dans laquelle les tubes du premier organe de support sont verticalement écartés des tubes du second organe de support et une seconde position dans laquelle les tubes du premier organe de support plongent par leur extrémité inférieure dans les tubes du second organe de support, lesdits éléments (10) d'obturation et de refoulement étant eux-mêmes montés mobiles sur ledit premier organe de support entre une position basse à l'écart de la paroi des tubes du premier support et une position haute en contact avec ladite paroi, chacun desdits éléments d'obturation et de refoulement étant à cet effet monté à l'extrémité inférieure recourbée (9) d'une tige (8) mobile verticalement le long du premier organe de support, le mouvement desdits éléments d'obturation et de refoulement entre lesdites positions basse et haute provoquant lorsque lesdits organes de support sont dans leur dite seconde position le refoulement d'une quantité déterminée de prélèvement sanguin des tubes (13) du second organe de support dans les tubes (4) du premier organe de support.

2. Appareil selon la revendication 1, caractérisé par le fait que les éléments d'obturation et de refoulement sont constitués par des disques (10).

3. Appareil selon l'une quelconque des revendications 1 et 2, caractérisé par le fait que le tronçon de section agrandie (4b) de chacun des tubes (4) est évasé vers le bas.

4. Appareil selon la revendication 3, caractérisé par le fait que lesdits disques (10) sont réalisés en une matière élastiquement déformable et présentent un diamètre intermédiaire entre le diamètre d'embouchure à l'extrémité évasée (4b) des tubes (4) du premier organe de support et le diamètre desdits tubes (4) dans leur partie principale non évasée (4a).

5. Appareil selon l'une quelconque des revendications précédentes, caractérisé par le fait que les tiges (8) sont solidaires à leur extrémité supérieure d'une pièce (5) mobile verticalement par rapport au premier organe de support.

6. Appareil selon l'une quelconque des revendications précédentes, caractérisé par le fait que les organes de support sont réalisés sous la forme de cylindres (1, 2) de section circulaire à la périphérie desquels sont montés lesdits tubes (4, 13).

7. Appareil selon les revendications 5 et 6, caractérisé par le fait que les tiges (8) comportant les disques d'obturation et de refoulement (10) sont solidaires à leur extrémité supérieure d'une couronne (5) montée mobile verticalement par rapport au cylindre (1) constituant le premier organe de support, notamment par un mécanisme à vis (6) et douille filetée.

8. Procédé pour la mise en œuvre de l'appareil selon l'une quelconque des revendications précédentes, caractérisé par le fait que l'on place les organes de support dans ladite première position pour mettre en place sur le second organe de support les tubes contenant des échantillons sanguins, on amène les organes de support dans ladite seconde position et on déplace les éléments d'obturation et de refoulement entre leur position basse et leur position haute jusqu'à amener une quantité déterminée de prélèvement sanguin au niveau de la graduation de référence dans chacun des tubes du premier organe de support, l'on maintient l'appareil dans cette position jusqu'à achèvement des lectures de niveau des hématies sédimentées, après quoi on procède au rinçage de l'appareil.

**Claims**

1. An apparatus for blood analyses allowing the erythrocyte sedimentation rates to be determined, characterised in that it comprises a first supporting member (1) comprising a plurality of graduated tubes (4), open at their two ends and kept vertically spaced out on the said supporting member, the said tubes (4) comprising in their lower portion a section with an enlarged cross section (4b), and a second supporting member (2) comprising a plurality of tubes (13) with a larger diameter than the tubes mounted on the first supporting member and capable of each receiving a blood sample, the said tubes (13) being distributed, vertically interspaced on the said second supporting member, the said first supporting member comprising moreover a plurality of obturating and delivery elements (10), each engaged in the enlarged lower ends (4b) of the said tubes of the first supporting member, the supporting members (1, 2) being displaceable in relation to each other between a first position wherein the tubes of the first supporting member are vertically separated from the tubes of the second supporting member and a second position wherein the tubes of the first supporting member penetrate with their lower ends into the tubes of the second supporting member, the said obturating and delivery elements (10) being themselves mounted for displacement on the said first supporting member between a low position at a distance from the wall of the tubes of the first support, and a high position in contact with the said wall, each of the said obturating and delivery elements being mounted for this purpose at the bottom bent up end (9) of a stem (8) vertically displaceable along the first supporting member, the movement of the said obturating and delivery elements between the said low and high positions producing the delivery of a given quantity of the blood samples from the tubes (13) of the second supporting member into the tubes (4) of the first supporting member when the said supporting members are in their so-called second position.

2. An apparatus according to Claim 1, characterised in that the obturating and delivery elements are constituted by discs (10).

3. An apparatus according to any one of Claims 1 and 2, characterised in that the section with the enlarged cross section (4b) of each of the tubes (4) flares towards the bottom.

4. An apparatus according to Claim 3, characterised in that the said discs (10) are made of an elastically deformable material and have an intermediate diameter, between the diameter of the opening at the flared end (4b) of the tubes (4) of the first supporting member and the diameter of the said tubes (4) in their main non-flaring section (4a).

5. An apparatus according to any one of the preceding Claims, characterised in that the stems (8) are fixed at their upper ends to a part (5) which is vertically displaceable in relation to the first supporting member.

6. An apparatus according to any one of the preceding Claims, characterised in that the supporting members are made in the form of cylinders (1, 2) with a circular cross section, at the periphery whereof the said tubes (4, 13) are mounted.

7. An apparatus according to Claims 5 and 6, characterised in that the stems (8) comprising the obturating and delivery elements (10) are fixed at their upper end to a ring (5) mounted for vertical displacement in relation to the cylinder (1) constituting the first supporting member, in particular, by means of a mechanism with a screw (6) and a threaded hole.

8. A method for the implementation of the apparatus according to any one of the preceding Claims, characterised in that the supporting members are placed into the said first position in order to position the tubes containing blood samples on the second supporting member, the supporting members are brought into the said second position and the obturating and delivery elements are displaced between their low position and their high position until a given blood sample quantity is brought to the level of the reference graduation in each one of the tubes of the first supporting member, that the apparatus is kept in this position until the readings of the sedimented erythrocytes are completed, after which, the rinsing of the apparatus is proceeded with.

**Patentansprüche**

1. Vorrichtung zur Blutanalyse, die eine Bestimmung der Blutkörperchensenkungsgeschwindigkeit gestattet, dadurch gekennzeichnet, daß sie ein erstes Halteorgan (1), das mehrere mit Skaleneinteilungen versehene, an beiden Enden offene Rohre (4) trägt, die senkrecht in Abstand zueinander an dem Halteorgan gehalten sind und in ihrem unteren Bereich einen Abschnitt mit vergrößertem Querschnitt (4b) aufweisen, und ein zweites Halteorgan (2) umfaßt, das mehrere jeweils zur Aufnahme einer Blutprobe dienende Rohre (13) trägt, die einen größeren Durchmesser als die an dem ersten Halteorgan montierten Rohre aufweisen und senkrecht, in gleichmäßigen Abständen verteilt an dem zweiten Halteorgan angeordnet sind, daß das erste Halteorgan außerdem mehrere Absperr- und Pumpelemente (10) aufweist, die jeweils in das vergrößerte untere Ende (4b) der Rohre des ersten Halteorgans eingreifen, daß die Halteorgane (1, 2) relativ zueinander beweglich sind zwischen einer ersten Position, in welcher die Rohre des ersten Halteorgans senkrecht von den Rohren des zweiten Halteorgans abgerückt sind, und einer zweiten Position, in welcher die Rohre des ersten Halteorgans mit ihrem unteren Ende in die Rohre des zweiten Halteorgans eintauchen, daß die Absperr- und Pumpelemente (10) ihrerseits beweglich an dem ersten Halteorgan montiert sind, so daß sie zwischen einer unteren Position in Abstand zu der Wand der Rohre des ersten Halteorgans und einer oberen Position beweglich sind, in der sie mit der besagten Wand in Berührung stehen, daß jedes der Absperr- und Pumpelemente zu diesem Zweck an einem gebogenen unteren Ende (9) einer Stange (8) montiert ist, die senkrecht längs des ersten Halteorgans beweglich ist, und daß die Bewegung der Absperr- und Pumpelemente zwischen der unteren und der oberen Position die Aufstauung einer bestimmten Menge der in den Rohren (13) des zweiten Halteorgans enthaltenen Blutprobe in den Rohren (4) des ersten Halteorgans bewirkt, wenn sich die Halteorgane in ihrer zweiten Position befinden.

2. Vorrichtung nach Anspruch 1, dadurch gekennzeichnet, daß die Absperr- und Pumpelemente als Scheiben (10) ausgebildet sind.

3. Vorrichtung nach Anspruch 1 oder 2, dadurch gekennzeichnet, daß der Abschnitt mit vergrößertem Querschnitt (4b) jedes der Rohre (4) nach unten erweitert ist.

4. Vorrichtung nach Anspruch 3, dadurch gekennzeichnet, daß die Scheiben (10) aus einem elastisch verformbaren Material gebildet sind und einen Durchmesser aufweisen, der zwischen dem Durchmesser der Öffnung am erweiterten Ende (4b) der Rohre (4) des ersten Halteorgans und dem Durchmesser der Rohre (4) in ihrem nicht erweiterten Hauptabschnitt (4a) liegt.

5. Vorrichtung nach irgendeinem der vorstehenden Ansprüche, dadurch gekennzeichnet, daß die Stangen (8) an ihrem oberen Ende fest mit einem senkrecht in Bezug auf das erste Halteorgan beweglichen Bauteil (5) verbunden sind.

6. Vorrichtung nach irgendeinem der vorstehenden Ansprüche, dadurch gekennzeichnet, daß die Halteorgane als Zylinder (1, 2) mit kreisförmigem Querschnitt ausgebildet sind, an deren Umfang die Rohre (4, 13) montiert sind.

7. Vorrichtung nach den Ansprüchen 5 und 6, dadurch gekennzeichnet, daß die Stangen (8), die die Absperr- und Pumpscheiben (10) tragen, mit ihrem oberen Ende fest an einem Kranz (5) montiert sind, der senkrecht in Bezug auf den das erste Halteorgan bildenden Zylinder (1) beweglich ist, und zwar insbesondere mit Hilfe eines Schrauben- und Gewindehülsenmechanismus (6).

8. Verfahren zur Bedienung einer Vorrichtung nach irgendeinem der vorstehenden Ansprüche, dadurch gekennzeichnet, daß man die Halteorgane in die erste Position bringt, um an dem zweiten Halteorgan die Rohre anzubringen, die Blutproben enthalten, daß man die Halteorgane in ihre zweite Position überführt und die Absperr- und Stauelemente zwischen ihrer unteren Position und ihrer oberen Position verschiebt, bis eine bestimmte Menge der Blutprobe in jedem der Rohre des ersten Halteorgans auf das Niveau der Bezugs-Skaleneinteilung angehoben ist, und daß man die Vorrichtung in dieser Position hält, bis die Ablesungen des Niveaus der abgesetzten Blutkörperchen beendet sind, und anschließend die Vorrichtung spült.

Fig.1

*Fig.2*

*Fig.3*

*Fig. 4*

*Fig. 5*

*Fig. 6*